# EUROPÄISCHE PATENTANMELDUNG

(11) **EP 0 616 101 A1**
(43) Veröffentlichungstag der Anmeldung: **21.09.1994**
(21) Anmeldenummer: 94103216.1
(22) Anmeldetag: 03.03.1994
(51) Int. Cl.: E05B 49/00, B60R 25/04

(54) **Fahrzeug-Schliesssystem**

(30) Priorität: 19.03.1993 DE 4308912
(71) Anmelder: SIEMENS AKTIENGESELLSCHAFT, D-80333 München (DE)
(72) Erfinder: Foerstl, Bernhard, Dipl.-Ing. (FH), D-93309 Kelheim (DE)

(57) **Zusammenfassung**

Bei einem Fahrzeug-Schließsystem hebt eine Registriereinrichtung zusätzlich zum Auslösen der Anzeige, daß der Energievorrat der Energiequelle des Senders knapp ist, die Wegfahrsperre vorübergehend solange auf, bis die Energiequelle wieder nachgeladen oder erneuert wurde, selbst wenn während der Aufhebung der Wegfahrsperre weiterhin die Verschlüsse des Fahrzeuges betätigt werden.

## Beschreibung

Die Erfindung geht von einem Fahrzeug-Schließsystem gemäß Patentanspruch 1 aus.

Die Erfindung betrifft also ein spezielles Schließsystem mit einem durch einen elektronisch wirkenden, einen Code abgebenden, tragbaren Sender/Schlüssel und einem Empfänger im Kraftfahrzeug, mit dem Türschlösser und auch eine Wegfahrsperre bei Betätigung gesteuert werden kann.

Bei einer noch nicht veröffentlichten Patentanmeldung (EP 94 100 461.6) stellt eine Registriereinrichtung die aktuelle Spannung der Energiequelle des Senders/Schlüssels fest. Eine den Benutzer warnende Anzeige wird ausgelöst, falls die Spannung der Energiequelle deutlich nachgelassen hat oder zumindest nachzulassen droht.

Dazu kann die Registriereinrichtung entweder unmittelbar die Restspannung messen und z.B. eine im Sender/Schlüssel angebrachte Warnlampe als optische Anzeige und/oder eine akustische Anzeige betätigen.

Diese im Fahrzeug angebrachte Registriereinrichtung kann dazu den Pegel der codierten Signale messen, welche vom Empfänger empfangen wurden und daraus indirekt Rückschlüsse auf die Restspannung des Energiespeichers des Senders/Schlüssels ziehen.

Wenn die Restspannung des Senders/Schlüssels zu stark abgesunken ist, so kann das Fahrzeug nicht mehr fernbedient geöffnet werden und die Wegfahrsperre läßt ein Starten des Fahrzeugs nicht mehr zu. Der Benutzer kann also trotz Berechtigung sein Fahrzeug nicht mehr verwenden.

Das Problem der Erfindung ist es, einem Benutzer zu ermöglichen, das Fahrzeug in jedem Falle noch mit mechanischen Schlüsseln starten zu können, auch wenn eine Registriereinrichtung bereits die Gefahr erkannte, daß der Energievorrat in der im Sender/Schlüssel angebrachten Energiequelle demnächst zur Neige geht oder bereits zur Neige gegangen ist.

Das Problem wird durch die im Patentanspruch 1 angegebenen Merkmale gelöst.

Die in den Unteransprüchen definierten Gegenstände gestatten zusätzliche Vorteile zu erreichen. So kann der Benutzer des Fahrzeugs rechtzeitig und deutlich gewarnt werden, wenn sein Fahrzeug nicht mehr wie vorher beim Parken mittels der Wegfahrsperre besonders gut gegen Diebstahl gesichert ist, sowie diese Warnung besonders auffällig durch eine Anzeige am Lenkrad an den Benutzer zu richten.

Bei der vorliegenden Erfindung zeigt die Registriereinrichtung bereits an, daß sie erkannte, daß im Sender/Schlüssel die aktuelle Spannung der Energiequelle nachläßt oder nachzulassen droht.

Die Registriereinrichtung hebt aber die Wegfahrsperre zusätzlich - z.B. bei der nächsten oder bei einer der nächsten Betätigungen des Schließsystems - auf Dauer für solange auf, bis die Energiequelle wieder nachgeladen oder erneuert wurde, selbst wenn während der Aufhebung der Wegfahrsperre weiterhin häufig die Verschlüsse des Fahrzeugs - z.B. mit mechanisch wirkenden Schlüsseln und/oder mit der Restenergie der im Sender/Schlüssel enthaltenen Energiequelle - betätigt werden. Diese auf Dauer wirkende Aufhebung der Wegfahrsperre kann z.B. mittels eines vom Schließsystem gesteuerten Relais oder auch softwaremäßig durch einen im Schließsystem enthaltenen Rechner erreicht werden.

Wenn die Wegfahrsperre auf Dauer aufgehoben wurde, dann kann der Fahrer weiterhin - z.B. auch mit seinem mechanisch wirkenden Schlüssel oder vielleicht auch mit der Restenergie der senderseitigen Energiequelle - die Schlösser des Schließsystems so betätigen, daß er das Fahrzeug öffnen und verschließen kann und daß er auch das Fahrzeug - z.B. mit seinem mechanisch wirkenden Zündschlüssel - starten kann, obwohl die Energiequelle im Sender/Schlüssel weder erneuert noch nachgeladen wurde.

Bei einer Weiterbildung dieser Erfindung ist zusätzlich vorgesehen, daß die Registriereinrichtung dann, solange sie auf Dauer die Wegfahrsperre aufhebt, eine Anzeige gerade dieser auf Dauer wirksamen Aufhebung auslöst. Diese deutliche auf diese Warnung gerichtete Anzeige ermöglicht, daß der Fahrer des Fahrzeugs rechtzeitig und deutlich erkennt, daß sein Fahrzeug nicht mehr wie vorher beim Parken mittels der Wegfahrsperre besonders gut gegen Diebstahl gesichert ist, und daß er also nicht nur wegen des Komfort einer elektronischen Fernsteuerung des Schließsystems, sondern nun auch zur Verbesserung des Diebstahlschutzes die Energiequelle im Sender/Schlüssel erneuern oder wiederaufladen muß.

Um diese Warnung besonders auffällig an den Fahrer zu richten, kann die Anzeige der auf Dauer wirksamen Aufhebung der Wegfahrsperre am Dashboard/Instrumentenpaneel des Fahrzeugs angebracht werden, oder auch unmittelbar am Lenkrad.

## Patentansprüche

1. Fahrzeug-Schließsystem, das durch einen elektronisch wirkenden, ein Codesignal abgebenden Sender/Schlüssel betätigbar ist und das bei seiner Betätigung auf Türschlösser urd eine Wegfahrsperre einwirkt, mit einer Registriereinrichtung, welche die aktuelle Spannung der Energiequelle des Senders/Schlüssels feststellt und eine den Benutzer warnende Anzeige auslöst, falls die Spannung der Energiequelle deutlich nachgelassen hat oder zumindest nachzulassen droht,
**dadurch gekennzeichnet, daß**
die Registriereinrichtung zusätzlich zum Auslösen der Anzeige - spätestens bei einer der nächsten Betätigungen des Schließsystems - die Wegfahrsperre auf Dauer für solange aufhebt, bis die Energiequelle wieder nachgeladen oder erneuert wurde, selbst wenn während der Aufhebung der Wegfahrsperre weiterhin die Verschlüsse des Fahrzeuges betätigt werden.

2. Schließsystem nach Patentanspruch 1, **dadurch gekennzeichnet, daß** die Registriereinrichtung eine Anzeige auslöst, die anzeigt, daß die Wegfahrsperre vorübergehend aufgehoben ist.

3. Schließsystem nach Patentanspruch 2, **dadurch gekennzeichnet, daß** sich die Anzeige der vorübergehenden Aufhebung der Wegfahrsperre am Dashboard/Instrumentenpaneel des Fahrzeuges befindet.

4. Schließsystem nach Patentanspruch 2, **dadurch gekennzeichnet,** daß sich die Anzeige der vorübergehenden Aufhebung der Wegfahrsperre am Lenkrad des Fahrzeuges befindet.
